# EUROPEAN PATENT APPLICATION

(11) **EP 2 818 736 A1**
(43) Date of publication of application: **31.12.2014**
(21) Application number: 13173436.0
(22) Date of filing: 24.06.2013
(51) Int. Cl.: F16C 7/02, B23P 19/04, F16J 10/04, F02F 7/00

(54) **Connecting rod**

(71) Applicant: Caterpillar Energy Solutions GmbH, 68167 Mannheim (DE)
(72) Inventor: Schiliro, Michele, 69483 Wald-Michelbach (DE)
(74) Representative: Kramer Barske Schmidtchen Patentanwälte PartG mbB

(57) **Abstract**

The present disclosure relates to a connecting rod (1) of a cylinder unit of an internal combustion engine. Connecting rod body (2) of connecting rod (1) may extend from a small end (3) to a big end (6) along a central axis (A). A first support portion (18) and a second support portion (20) may be arranged on opposing sides of the big end (6) with respect to the central axis (A). Both the first support portion (18) and the second support portion (20) may be configured to support a cylinder liner during its insertion into and its removal from a cylinder bore within an engine block of an internal combustion engine. Said design of connecting rod (1) may allow to build big end (6) of connecting rod (1) bigger which may enhance rigidity of the same.

## Description

### Technical Field

The present disclosure generally relates to internal combustion engines, and more particularly to a device and method for mounting and demounting of a cylinder unit to and from a cylinder bore of an internal combustion engine, the cylinder unit comprising a connecting rod, a piston, and a cylinder liner.

### Background

Connecting rods are used to connect pistons to crankshafts. Specifically, a small end of a connecting rod is connected to a piston, whereas a big end of the connecting rod is connected to a crankshaft. That is, the connecting rod either transmits the translatory movement of the piston to a rotation of the crankshaft during an expansion stroke, or transmits a rotation of the crankshaft to a translatory movement of the piston during the remaining strokes. To connect the connecting rod to the crankshaft, the big end which is produced as a unit has to be split into big end base and big end cap, both being reconnected around a crankpin of the crankshaft by means of bolts or screws. Splitting of the big end can be either performed as a straight split or an oblique split.

As a general rule, a straight split of the connecting rod is preferred over an oblique (angular) split of the connecting rod. The reason is that a straight split provides a more homogenous stress distribution within the big end and a lower stress on the big end cap during operation. This may increase the durability of the connecting rod and may reduce the risk of connecting rod fractures in comparison to oblique split connecting rods. However, providing a straight split may require more space to accommodate the bolts at each side of a connecting rod big end which may be problematic, for example, for the following reason.

In practice, big end designs which allow an assembly and disassembly of the connecting rod through the cylinder liner are preferred for sake of assembly simplicity. That is, the maximum width of the connecting rod big end is limited by an inner diameter of the cylinder liner through which the connecting rod is inserted into and pulled out of an engine block of the internal combustion engine. Due to this space limitation, oblique split connecting rods which usually require less space are often used although one would naturally prefer a straight split connecting rod because of the preferred homogenous stress distribution.

The present disclosure is directed, at least in part, to improving or overcoming one or more aspects of prior systems.

### Summary of the Disclosure

According to one aspect of the present disclosure, a connecting rod may be configured to be connected to a piston. The piston may be reciprocatingly mounted within a cylinder liner to be inserted into a cylinder bore of an internal combustion engine. The connecting rod may comprise a connecting rod body extending from a small end to a big end along a central axis. The connecting rod may further comprise a first support portion and a second support portion arranged on opposing sides of the big end with respect to the central axis. The first support portion and the second support portion may be configured to support the cylinder liner during its insertion into and its removal from the cylinder bore.

According to another aspect of the present disclosure, a cylinder assembly kit may be configured to be inserted into a cylinder bore of an internal combustion engine. The cylinder assembly kit may comprise a connecting rod as exemplary disclosed herein, and a piston connected to the small end of the connecting rod. The cylinder assembly kit may further comprise a cylinder liner configured to be inserted into the cylinder bore and including a circumferential bottom edge being supported by the first supporting portion and the second supporting portion of the connecting rod.

According to yet another aspect of the present disclosure, a method for assembling a cylinder unit of an internal combustion engine may comprise providing a cylinder assembly kit as exemplary disclosed herein. The method may further comprise inserting the cylinder assembly kit into the cylinder bore, whereby the first support portion and the second support portion may support the cylinder liner.

According to yet another aspect of the present disclosure, a method for disassembling a cylinder unit of an internal combustion engine may comprise providing a cylinder assembly kit as exemplary disclosed herein within a cylinder bore of the internal combustion engine. The method may further comprise moving the piston together with the connected rod in direction of a cylinder top until the first support portion and the second support portion of the connecting rod contact a bottom edge of the cylinder liner to support the cylinder liner. The method may further comprise removing the cylinder assembly kit from of the cylinder bore as a whole.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows an exemplary embodiment of a connecting rod according to the present disclosure;
Fig. 2 shows an exemplary embodiment of a cylinder assembly kit according to the present disclosure;
Fig. 3 shows a sectional view of a section an engine block with the cylinder assembly kit during an initial mounting step;
Fig. 4 shows a sectional view of the engine block section with the exemplary embodiment of the cylinder assembly kit during mounting; and
Fig. 5 shows a sectional view of the engine block section with the cylinder assembly kit during a final mounting step.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that by mounting a cylinder assembly kit comprising a piston, a connecting rod, and a cylinder liner as a whole into a cylinder bore of an internal combustion engine, the big end width of the connecting rod can be increased to be greater than the inner cylinder liner diameter. An enlarged big end may have an enhanced rigidity and may facilitate a straight split design of the connecting rod big end which may be favored over an oblique split design in terms of a homogenous stress distribution.

The present disclosure is further based in part on the realization that when mounting a cylinder assembly kit comprising a piston, a connecting rod, and a cylinder liner as a whole into a cylinder bore of an internal combustion engine, the connecting rod design can be modified to allow using the piston together with the connecting rod as a mounting tool. That is, the mounting tool may facilitate and ease inserting of the cylinder assembly kit into and removing the same from the cylinder bore.

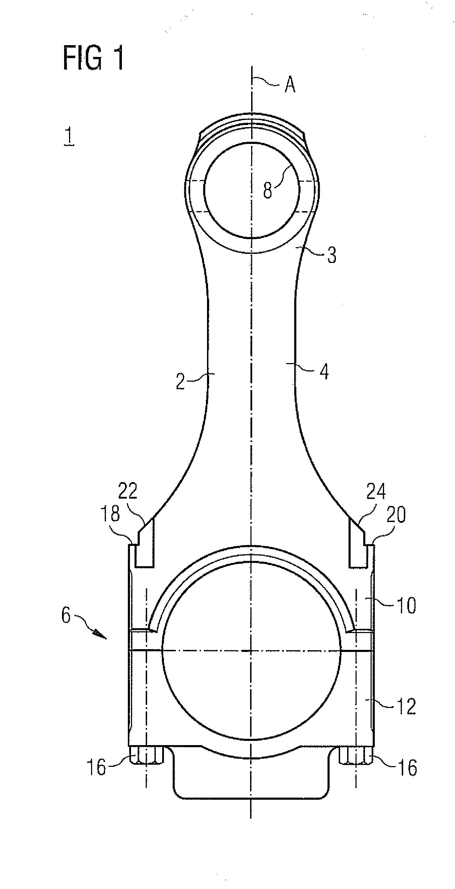

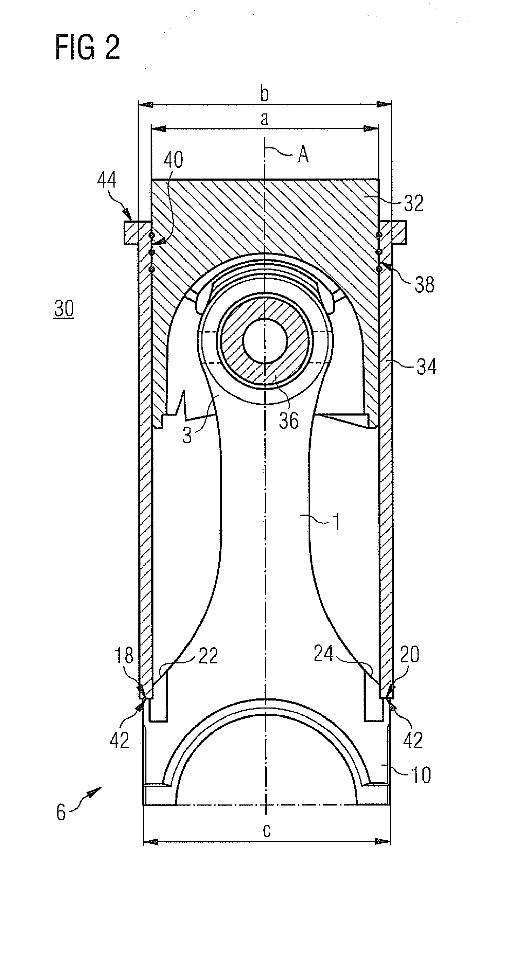

Accordingly, hereinafter exemplary embodiments of a connecting rod as well as exemplary embodiments of a cylinder assembly kit which include the above-mentioned features are described with reference to Figs. 1 and 2.

Turning to Fig. 1, a connecting rod is referred to by reference numeral 1. Connecting rod 1 is configured to be connected to a piston (not shown in Fig. 1) to be reciprocatingly mounted within a cylinder liner inserted into a cylinder bore of an internal combustion engine (not shown in Fig. 1). Connecting rod 1 comprises a connecting rod body 2 with a small end 3, a beam 4, and a big end 6. Connecting rod body 2 extends from small end 3 to big end 6 along a central axis A. Specifically, beam 4 extends between small end 3 and big end 6.

For mounting connecting rod 1 to a piston, small end 3 includes a piston pin opening 8 to receive a piston pin (not shown in Fig. 1). For example, a piston pin bushing may be provided within piston pin opening 8, and the piston pin is press fit within the piston pin bushing.

Big end 6 comprises a big end cap (big end lower half) 12 which is connected to a big end base (big end upper half) 10 via two screws 16 each being screwed into a respective blind hole in big end base 10. In other embodiments, big end cap and big end base may be attached to one another via other techniques, for example, bolts and nuts.

As can be seen, big end 6 is configured as a straight split big end. Alternatively, big end 6 may be configured as an oblique split big end. Various techniques to split big end 6 of connecting rod 1 may be used to split big end 6 into big end base 10 and big end cap 12 such as cutting and cracking.

In some embodiments, the contact surfaces of big end base 10 and big end cap 12 may be provided with teeth. Alternatively, those contact surfaces may be provided without teeth, particularly, if big end 6 is configured as a straight split big end.

A first support portion 18 and a second support portion 20 are arranged on opposing sides of big end 6 with respect to central axis A. As is described in detail hereinafter with reference to Fig. 2, first support portion 18 and second support portion 20 are configured to support a cylinder liner (not shown in Fig. 1) during insertion into and removal from a cylinder bore within an engine block of an internal combustion engine (also not shown in Fig. 1).

In some embodiments, first support portion 18 and/or second support portion 20 may be coated, for example with a plastic coating, or may be hardened.

Additionally, a first centering portion 22 and a second centering portion 24 may be arranged on opposing sides of big end 6 with respect to central axis A. First centering portion 22 and second centering portion 24 may be configured to guide a circumferential bottom edge (not shown in Fig. 1) of the cylinder liner onto the first and second support portion 18, 20 when inserting connecting rod 1 into cylinder liner 34 from below. For example, centering portions 22 and 24 may be flat faces at an oblique angle with respect to central axis A, or may have a curved shape.

Referring to Fig. 2, a cylinder assembly kit 30 configured to be inserted into a cylinder bore of an internal combustion engine (not shown in Fig. 2) is shown. Cylinder assembly kit 30 comprises connecting rod 1, a piston 32, and a cylinder liner 34.

Piston 32 is connected to small end 3 of connecting rod 1 via a piston pin 36. Although not specifically shown in Fig. 2, piston 32 comprises at least one piston ring to seal a gap between piston skirt 38 and an inner surface 40 of cylinder liner 34.

Cylinder liner 34 comprises a circumferential bottom edge 42 defining a bottom end of cylinder liner 34, and is configured to be inserted into a cylinder bore of an internal combustion engine.

To assemble cylinder assembly kit 30 as depicted in Fig. 2, in a first step, piston 32 is connected to connecting rod 1. Then, fully equipped piston 32 with connecting rod 1 is inserted into cylinder liner 34 from below. In other words, a piston crown of piston 32 is inserted into cylinder liner 34 at the bottom end thereof which is defined by circumferential bottom edge 42. Piston 32 together with connecting rod 1 are further moved in direction of a circumferential top edge 44 of cylinder liner 34.

Due to the presence of first centering portion 22 and second centering portion 24, bottom edge 42 of cylinder liner 34 can be smoothly guided onto first support portion 18 and second support portion 20. Specifically, first centering portion 22 and second centering portion 24 facilitate centering of connecting rod 1 within cylinder liner 34. Comparing a distance between each centering portion 22, 24 and central axis A to a distance between each supporting portion 18, 20 and center axis A, the latter is greater than the former.

In the shown assembly state of Fig. 2, cylinder liner 34 is supported on big end 6 (specifically, on big end base 10 of big end 6) of connecting rod 1 via a contact between bottom edge 42 and support portions 18 and 20. That support is facilitated as first support portion 18 and second support portion 20 are configured to support circumferential bottom edge 42 of cylinder liner 34. Specifically, first support portion 18 and second support portion 20 are configured to receive a force from cylinder liner 34 during insertion into the cylinder bore which mainly results from a weight of cylinder liner 34 and to apply a force to cylinder liner 34 during its removal.

Cylinder liner 34 is further defined by an inner cylinder liner diameter a and an outer cylinder liner diameter b of a section which extends within the cylinder bore in an assembled state. Connecting rod 1 includes a maximum width at big end 6 which is indicated by reference sign c. To facilitate insertion and removal of cylinder assembly kit 30 as described later on, the maximum width c of big end 6 needs to be greater than the inner cylinder liner diameter a and to be lower than or equal to the outer cylinder liner diameter b.

In the shown configuration, first and second support portions 18, 20 are each configured as a support face being substantially flat and perpendicular to central axis A. In other embodiments, first and second support portions 18, 20 may be configured in an alternative shape which may match with the bottom end of cylinder liner 34, for example, a conical seat including a first conical seat segment at first support portion 18 and a second conical seat segment at second support portion 20.

To enable support of cylinder liner 34 by support portion 18, 20, both first support portion 18 and second support portion 20 are arranged at big end 6 within a range from inner cylinder liner diameter a and outer cylinder liner diameter b. In other words, first support portion 18 and second support portion 20 are arranged to at least partly contact bottom edge 42 of cylinder liner 34.

In some embodiments, first support portion 18 and second support portion 20 are mirror-symmetrically designed with respect to central axis A. Additionally or alternatively, first centering portion 22 and second centering portion 24 may be mirror-symmetrically designed with respect to central axis A.

In some embodiments, bottom edge 42 of cylinder liner 34 and both first support portion 18 and second support portion 20 are configured to contact each other by form fit (form closure).

### Industrial Applicability

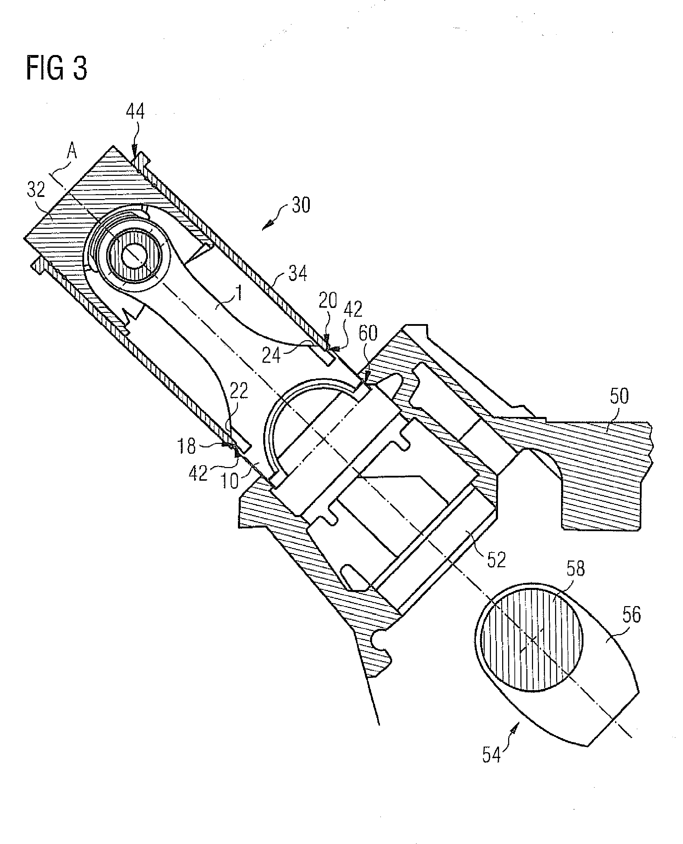

Before describing assembly of cylinder assembly kit 30 into a cylinder bore, an internal combustion engine comprising the cylinder bore is described in more detail with reference to Fig. 3.

In Fig. 3, a section of an engine block 50 is shown in a sectional view. Engine block 50 comprises a plurality of cylinder bores, one of which is indicated by reference numeral 52.

Engine block 50 forms part of an internal combustion engine not shown in detail. Said internal combustion engine may include features not shown, such as air systems, cooling systems, peripheries, drivetrain components, etc. Furthermore, the internal combustion engine may be of any size, with any number of cylinders, and in any configuration (for example, "V," in-line, radial, etc.). One skilled in the art will appreciate from studying Fig. 3 that engine block 50 of the internal combustion engine includes a V-configuration of the cylinders. Additionally, internal combustion engine may be used to power any machine or other device, including, but not limited to, locomotive applications, on-highway trucks or vehicles, off-highway trucks or machines, earth moving equipment, generators, aerospace applications, marine applications, offshore applications, pumps, stationary equipment, or other engine powered applications. Internal combustion engine may be powered with any fuel including, but not limited to, diesel, gasoline, and/or gaseous fuels. For example, said internal combustion engine may be a dual fuel engine capable to run on a liquid fuel and/or a gaseous fuel, or may be an engine capable to run on various liquid fuels such as diesel and heavy fuel oil.

A rotatable crankshaft 54 is provided within a crankcase in engine block 50. Crankshaft 54 is build up of a plurality of webs (one of which is indicated by numeral 56), each web being connected at one side to a main journal and at the opposite side to a crankpin journal (one of which is indicated by numeral 58). Depicted crankpin journal 58 is configured to be mounted to big end 6 of connecting rod 1 via big end bearings. Crankshaft 54 may further include features not shown, such as, for example, a crank nose, a mount for a camshaft drive sprocket, an oilway with oil holes, counterweights, and a flywheel mounting flange.

In the following, assembly of cylinder assembly kit 30 into cylinder bore 52 is described with reference to Figs. 3 to 5.

Referring to Fig. 3, a method for assembling a cylinder unit of an internal combustion engine comprises providing cylinder assembly kit 30 and aligning the same with the crankcase of crankshaft 54. Depending on the overall size and weight of cylinder assembly kit 30, alignment of the same may be performed, for example, by at least one mechanic who may be assisted by an alignment device.

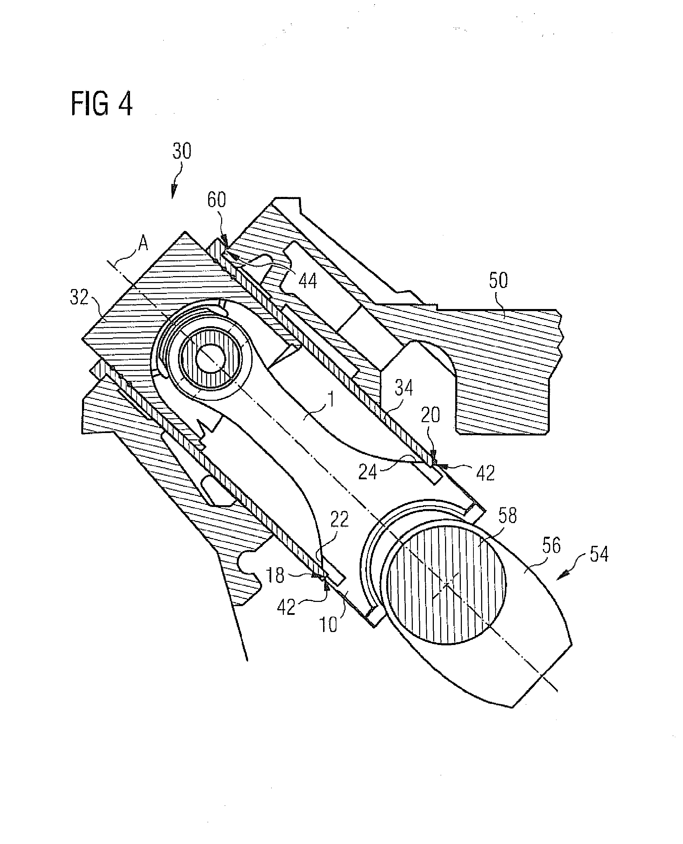

Turning to Fig. 4, cylinder assembly kit 30 is inserted into cylinder bore 52. Thereby, first support portion 18 and second support portion 20 support cylinder liner 34 until circumferential top edge 44 of cylinder liner 34 contacts an opening edge 60 of cylinder bore 52 and is supported thereon which is depicted in Fig. 4. As soon as cylinder liner 34 is supported on opening edge 60, cylinder liner 34 can be secured thereto, for example, via bolts.

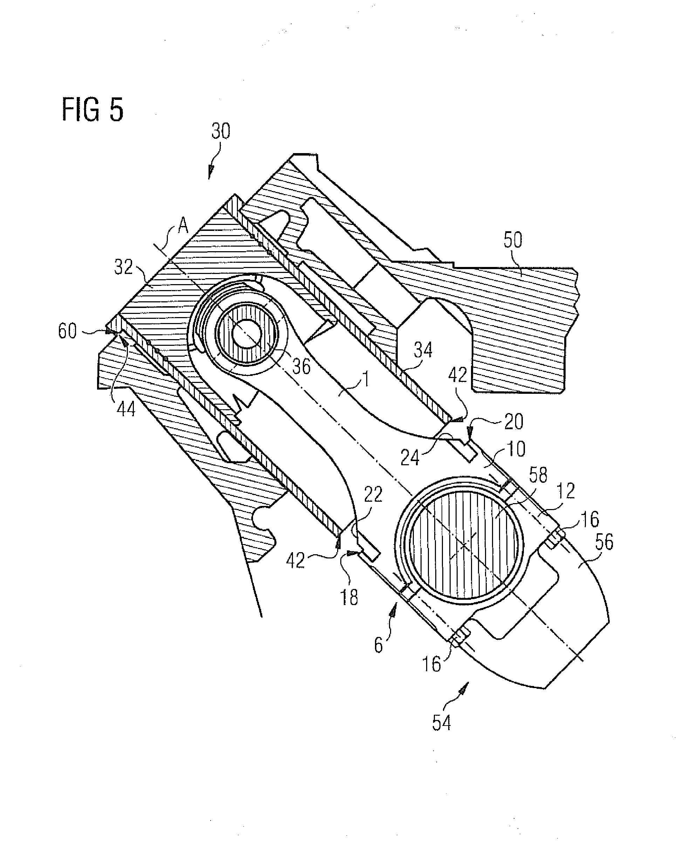

Referring to Fig. 5, piston 32 together with connecting rod 1 are further moved in direction of crankshaft 54, whereby connecting rod 1 is guided by a contact between first centering portion 22 (and/or second centering portion 24) and inner cylinder liner surface 40. Said guidance allows maintaining the alignment of connecting rod 1 with respect to crankshaft 54. Piston 32 and connecting rod 1 are further moved until big end 6 reaches crankpin 58 for mounting thereto. Then, big end cap 12 is mounted to big end base 10 via screws 16.

Disclosed cylinder assembly kit 30 not only facilitates an integrated mounting of piston 32, connecting rod 1, and cylinder liner 34 in cylinder bore 52 of the internal combustion engine. Moreover, cylinder assembly kit 30 may further facilitate demounting of piston 32, connecting rod 1, and cylinder liner 34 as a whole which can be schematically followed when regarding Figs. 3 to 5 in reversed order.

An examplary method for disassembling a cylinder unit of an internal combustion engine including a mounted cylinder assembly kit 30 in one cylinder bore 52 is described in the following.

Specifically, after demounting a cylinder head (not shown), big end cap 12 is detached from big end base 10 to release connecting rod 1 from crankshaft 54. Piston 32 together with connecting rod 1 are moved (either pushed or pulled) away from crankshaft 54 in direction of a cylinder top (opening edge 60). While moving, connecting rod 1 is guided via first centering portion 22 and/or second centering portion 24 which reduces the risk of scratches and damages of inner cylinder liner surface 40.

Piston 32 and connecting rod 1 are moved until first and second support portions 20 contact bottom edge 42 of cylinder liner 34. Moving piston 32 and connecting rod 1 further results in carrying of cylinder liner 34 which is supported on big end 6. That is, cylinder assembly kit 30 can be removed from cylinder bore 52 as a whole similar to insertion of the same. Naturally, bolts securing cylinder liner 34 in cylinder bore 52 have to be unscrewed in advance to facilitate the above described carrying of cylinder liner 34.

Note that cylinder assembly kit 30 is inserted into and removed from cylinder bore 52 without big end cap 12 which is disassembled from connecting rod 1 before insertion and removal, respectively. That is, cylinder assembly kit 30 is inserted and removed in an assembly state as depicted in Fig. 2.

As one skilled in the art will appreciate, in the shown configuration of Figs. 3 to 5, cylinder liner 34 and cylinder bore 52 are of the wet-type which means that cylinder liner 34 is sealed at a top and a bottom of cylinder bore 52 such that an outer surface of cylinder liner 34 is in direct contact with a coolant flowing in gaps between cylinder liner 34 and cylinder bore 52.

By providing cylinder assembly kit 30 as described above, a greater width of big end 6 is facilitated while inserting and removal through cylinder bore 52 is still possible. Specifically, big end width c can be chosen to be greater than inner cylinder liner diameter a. Enlarging the width of big end 6 may lead to an enhanced rigidity and may also allow providing a straight split big end which is favored over an oblique split big ends in terms of a homogeneous stress distribution, but requires more space to provide bolts or screws at each side of big end 6.

Additionally, insertion and removal of piston 32, connecting rod 1, and cylinder liner 34 as a whole may enhance the assembly and disassembly of a cylinder unit in terms of time saving, simplifying, and increased accuracy.

Although the preferred embodiments of this invention have been described herein, improvements and modifications may be incorporated without departing from the scope of the following claims.

## Claims

1. A connecting rod (1) configured to be connected to a piston (32) to be reciprocatingly mounted within a cylinder liner (34) to be inserted into a cylinder bore (52) of an internal combustion engine, the connecting rod (1) comprising:
a connecting rod body (2) extending from a small end (3) to a big end (6) along a central axis (A); and
a first support portion (18) and a second support portion (20) arranged on opposing sides of the big end (6) with respect to the central axis (A), the first support portion (18) and the second support portion (20) being configured to support the cylinder liner (34) during its insertion into and its removal from the cylinder bore (52).

2. The connecting rod (1) of claim 1, wherein the first support portion (18) and the second support portion (20) are configured to receive a force from the cylinder liner (34) during its insertion into the cylinder bore (52) and to apply a force to the cylinder liner (34) during its removal from the cylinder bore (52).

3. The connecting rod (1) of claim 1 or 2, wherein the cylinder liner (34) comprises a circumferential bottom edge (42), and the first supporting portion (18) and the second supporting portion (20) are configured to support the circumferential bottom edge (42) of the cylinder liner (34) during its insertion into and its removal from the cylinder bore (52).

4. The connecting rod (1) of any one of the preceding claims, wherein
the first support portion (18) and the second support portion (20) are each configured as a support face being substantially perpendicular to the central axis (A); and/or
the first support portion (18) and the second support portion (20) are mirror-symmetrically designed with respect to the central axis (A).

5. The connecting rod (1) of any one of the preceding claims, wherein the connecting rod (1) further comprises a first centering portion (22) and a second centering portion (24) arranged on opposing sides of the big end (6) with respect to the central axis (A), the first centering portion (22) and the second centering portion (24) being configured to guide a circumferential bottom edge (42) of the cylinder liner (34) onto the first support portion (18) and the second support portion (20) when inserting the connecting rod (1) into the cylinder liner (34) from below.

6. The connecting rod (1) of claim 5, wherein the first centering portion (22) and the second centering portion (24) are mirror-symmetrically designed with respect to the central axis (A).

7. The connecting rod (1) of any one of the preceding claims, wherein
the big end (6) is configured as a straight split big end; or
the big end (6) is configured as an oblique split big end.

8. A cylinder assembly kit (30) configured to be inserted into a cylinder bore (52) of an internal combustion engine, the cylinder assembly kit (30) comprising:
a connecting rod (1) according to any one of claims 1 to 7;
a piston (32) connected to the small end (3) of the connecting rod (1); and
a cylinder liner (34) configured to be inserted into the cylinder bore (52) and including a circumferential bottom edge (42) being supported by the first supporting portion (18) and the second supporting portion (20) of the connecting rod (1).

9. The cylinder assembly kit (30) of claim 8, wherein the cylinder liner (34) is configured as a wet-type cylinder liner.

10. The cylinder assembly kit (30) of claim 8 or 9, wherein the cylinder liner (34) comprises an inner cylinder liner diameter (a) and an outer cylinder liner diameter (b), and the big end (6) of the connecting rod (1) comprises a maximum width (c) being greater than the inner cylinder liner diameter (a) and being lower than or equal to the outer cylinder liner diameter (b).

11. The cylinder assembly kit (30) of any one of claims 8 to 10, wherein the bottom edge (42) of the cylinder liner (34) and both the first support portion (18) and the second support portion (20) are configured to contact each other by form fit.

12. A method for assembling a cylinder unit of an internal combustion engine, comprising:
providing a cylinder assembly kit (30) according to any one of claims 8 to 11;
inserting the cylinder assembly kit (30) into the cylinder bore (52), whereby the first support portion (18) and the second support portion (20) support the cylinder liner (34).

13. The method of claim 12, comprising guiding the connecting rod (1) and the connected piston (32) via a contact between an inner cylinder liner surface (40) and at least one of the first centering portion (22) and the second centering portion (24) onto a crankpin (58) of the crankshaft (54).

14. A method for disassembling a cylinder unit of an internal combustion engine, comprising:
providing a cylinder assembly kit (30) according to any one of claims 8 to 11 within a cylinder bore (52) of the internal combustion engine;
moving the piston (32) together with the connecting rod (1) in direction of a cylinder top until the first support portion (18) and the second support portion (20) of the connecting rod (1) contact a bottom edge (42) of the cylinder liner (34) to support the cylinder liner (34); and
removing the cylinder assembly kit (30) from the cylinder bore (52) as a whole.

15. The method of claim 14, further comprising:
guiding the connecting rod (1) via a contact between an inner cylinder liner surface (40) of cylinder liner (34) and at least one of the first centering portion (22) and the second centering portion (24) of the connecting rod (1) until the first support portion (18) and the second support portion (20) contact the bottom edge (42) of the cylinder liner (34).
